# EUROPEAN PATENT SPECIFICATION

(11) **EP 1 978 676 B1**
(45) Date of publication and mention of the grant of the patent: **10.02.2010**
(21) Application number: 07108489.1
(22) Date of filing: 18.05.2007
(51) Int. Cl.: H04L 12/28, H04L 12/56, H04W 88/06

(54) **Apparatus, and associated method, for facilitating reconnection of a wireless device to a network**
Vorrichtung und dazugehöriges Verfahren zur Unterstützung der Wiederverbindung einer drahtlosen Vorrichtung an ein Netz
Appareil et procédé associé, pour faciliter la reconnexion d'un dispositif sans fil à un réseau

(30) Priority: 06.04.2007 US 697432
(43) Date of publication of application: 08.10.2008
(73) Proprietor: Research In Motion Limited, Waterloo, Ontario N2L 3W8 (CA)
(72) Inventor: Buckley, Adrian, Tracy, CA 95376 (US)
(74) Representative: Hibbert, Juliet Jane Grace

(56) References cited:
- GB-A- 2 328 845
- US-A1- 2006 142 004
- US-A1- 2006 171 305
- US-A1- 2006 221 901

## Description

The present invention relates generally to communication connectivity for a wireless device in a radio communication system, such as an 1-WLAN (Interworking Wireless Local Area Network) system. More particularly, the present invention relates to apparatus, and an associated method, by which to facilitate reconnection of the wireless device to a network part of the radio communication system subsequent to loss of the connectivity.

A buffer is provided for storing network information identifying the network part with which the wireless device communicates. Upon occurrence of loss of communication connectivity, the buffer is accessed, and the wireless device attempts to reconnect with the network whose identity is buffered at the buffer.

### Background of the Invention

Advancements in communication technologies have permitted the development and deployment of many varied types of radio communication systems. Radio communication systems are regularly used by many through which to communicate to effectuate communication services.

A cellular communication system is exemplary of a radio communication system made possible by communication technology advancements and whose use is pervasive. A cellular communication system, also referred to as a Public Land Mobile Network (PLMN), conforms with the operational parameters of an operating specification, typically promulgated by a standards-setting body. Successive generations of operating specifications and cellular communication systems have been promulgated and deployed, each generation providing additional communication service capabilities.

A Wireless Local Area Network (WLAN) is also exemplary of a radio communication system made possible as a result of communication technology advancements and whose use is becoming pervasive. Typically using communication protocols and standards different than those used in cellular systems, a WLAN is operable, at least in various aspects, in manners that are analogous to operation of cellular communication systems. Wireless Local Area Networks are more generally used as small-area systems, operated over areas that generally are smaller than the coverage areas encompassed by a cellular communication system. In various additional aspects, a Wireless Local Area Network is a wireless extension of a conventional local area network. Wireless Local Area Networks, analogous to their wired counterparts, generally provide for the communication of packet-formatted data pursuant to effectuation of data-intensive, packet communication services. A WLAN is identified by an SSID (Service Set Identifier) and a WLAN shall, at times herein, be referred to as an SSID.

Wireless devices, also referred to as mobile stations and User Equipment (UE), are sometimes constructed to be capable of communication both by way of a WLAN and by way of a cellular communication system. Network entities and devices are also available that provide for interworking between a WLAN and a PLMN. Through such interworking, a wireless device is capable of communicating with a PLMN by way of a Wireless Local Area Network. An existing I-WLAN (Interworking Wireless Local Area Network) specification sets forth various procedures related to I-WLAN workings, including, e.g., network selection procedures. Selection procedures are followed in order to make selection of a Public Land Mobile Network through which the device shall communicate by way of an I-WLAN. Pursuant to selection procedures, the wireless device identifies available I-WLANs and the associated PLMNs, associated with the respective I-WLANs. An I-WLAN also is identified by its SSID (Service Set Identifier) and the I-WLAN shall also, at times, be referred to herein as an SSID.

Once selection is made, communication connections are formed and data is communicated by way of the communication connections via the selected SSID and PLMN. In the event of loss or interruption of communication connectivity, the wireless device must reestablish communication connectivity in order to continue with the data communication pursuant to the communication service. While GSM (Global System for Mobile Communications) and UMTS (Universal Mobile Telephone Service) specifications provide for the concept of a last-registered PLMN to facilitate reconnection, no analogous mechanism or procedure is available for I-WLAN operation. Connectivity issues in an I-WLAN system are complicated as connectivity must be provided between the wireless device and the SSID as well as with the selected PLMN.

US Patent Application 2006/142004 describes a method that involves determining whether a wireless connection between a first access point and a wireless station has failed. If so, a partial scanning process is conducted only on a subset of communication channels over which data is transmitted by access points neighboring the first access point. The subset of communication channels, inclusive of zero, is determined by analysis of a scanning history database, US Patent Application 2006/221901 describes a method involving a mobile device discovery and use of target wireless networks which are at least partly within a coverage area of another wireless network which provides location information which includes: acquiring data from a plurality of said target wireless networks; acquiring location information from said another wireless network; mapping said data from said plurality of said target wireless networks with said location information; and selecting one of said plurality of target wireless networks based on said mapped data. A need remains, therefore, to provide a manner by which to facilitate reconnection of an I-WLAN wireless device subsequent to a loss of communication connectivity.

It is in light of this background information related to communications of an I-WLAN, wireless device that the significant improvements of the present invention have evolved.

### Brief Description of the Drawings

Figure 1 illustrates a functional block diagram of a radio communication system in which an embodiment of the present invention is operable.

Figure 2 illustrates a representation of an exemplary listing created and maintained at a wireless device forming part of the communication system shown in Figure 1.

Figure 3 illustrates an exemplary table, also created and maintained at the wireless device forming part of the communication system shown in Figure 1.

Figure 4 illustrates a representation of information collected and stored pursuant to operation of an embodiment of the present invention.

Figure 5 illustrates an implementation of an exemplary format of the information collected pursuant to an embodiment of the present invention.

Figure 6 illustrates a representation of another exemplary table formed pursuant to operation of an embodiment of the present invention.

Figure 7 illustrates a representation, similar to that shown in Figure 6, but of an alternate exemplary table.

Figure 8 illustrates a method flow diagram representative of the method of operation of an embodiment of the present invention.

### Detailed Description

The present invention, accordingly, advantageously provides apparatus, and an associated method, for facilitating communication connectivity of a wireless device operable in a radio communication system, such as an I-WLAN system.

Through operation of an embodiment of the present invention, a manner is provided by which to facilitate reconnection of the wireless device to a network part of the radio communication system subsequent to loss of the connectivity.

In one aspect of the present invention, a buffer is provided at which network information identifying the network part with which the wireless device communicates, or most-recently communicated, is stored. Upon connectivity interruption, i.e., loss of communication connectivity, the buffer is accessed, the stored contents are retrieved, and the retrieved contents are used to reconnect the wireless device to the entity identified in the retrieved content. Thereby, the wireless device makes a reconnection attempt without having to scan for available SSIDs to determine which PLMNs are associated with the available SSIDs, and then make selection therefrom. By attempting reconnection with the network entities with which connection has most recently been successful, prior to the communication connectivity loss, the SSID/PLMN that would most likely have otherwise been chosen through carrying out of a full search and selection is made without necessitating the time delays, processing requirements, and power consumption associated with a full search.

In another aspect of the present invention, a buffer or memory store is provided for the wireless device at which to store the most-recent connection of the wireless device. The buffer is defined, or provided, as a permanent memory of the wireless device. Or, the buffer is provided, or defined, at a removable memory device, such as a SIM(U), SIM, an ISIM, an R-UIM, a compact flash memory, a micro-SD, a memory stick, or other memory element releasably connectable to the wireless device. The information stored at the buffer is alternately read and written thereto, or imaged in the wireless device.

In another aspect of the present invention, a wireless device performs scanning operations to identify available SSIDs. And, a determination is made of PLMNs associated with the available SSIDs. Association is determined, e.g., responsive to information broadcast by the network or information stored at the wireless device. From the collected, or determined, information, selection is made of an SSID, and associated PLMN, throughwhich to communicate. The selection is buffered at a buffer, either immediately subsequent to the selection or upon formation of the communication connection with the selected entities. If the selection changes, such as that caused by repositioning of the wireless device or unsuccessful formation of the communication connectivity links with the first selection, the stored information is updated with updated information.

In another aspect of the present invention, upon loss of the communication connectivity, the buffer is accessed, and the accessed information is used to attempt to reconnect the communication connectivity. The SSID stored at the buffer is used to reattempt to reconnect therewith if the communication connectivity with the SSID is lost. If the connectivity with the SSID has been maintained, but the connectivity with the associated PLMN has been lost, then the PLMN information is used to attempt reconnection therewith. If the reconnection attempt is successful, the searching of the SSIDs and their associated PLMNs is obviated. And, in the event that the reconnection attempt is unsuccessful, or a selected number of successive attempts are unsuccessful, then the wireless device scans for the available SSIDs. And, if, prior to reconnection using the accessed information, a decision is made to attempt connection with another SSID or associated PLMN, then the wireless device attempts, if desired, to connect with the alternate S SID or PLMN.

In these and other aspects, therefore, apparatus, and an associated method is provided for a wireless device to facilitate reconnection thereof subsequent to loss of connection of communication connectivity of the wireless device. A buffer is configured to store a configuration of an identity of a most-recent connection of the wireless device. An access store is configured to access the buffer responsive to the loss of the connection to retrieve a value of the information stored thereat. The value is used to attempt the reconnection of the wireless device into the communication connectivity.

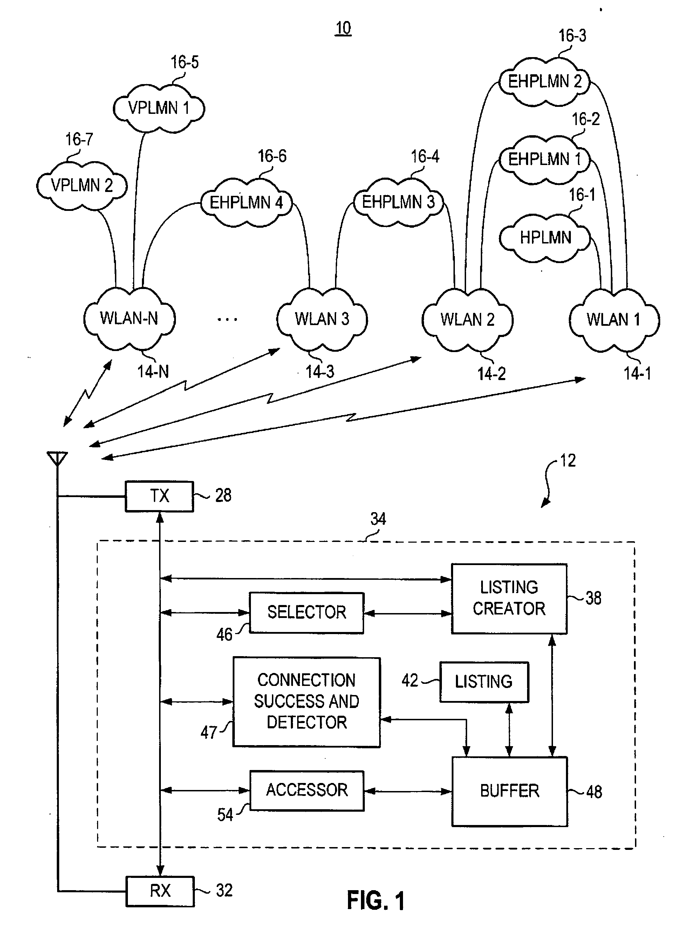

Turning first, therefore, to Figure 1, a radio communication system, shown generally at 10, provides for radio communications with wireless devices, here represented by the wireless device 12. The wireless device is representative of any of various radio transceivers, such as a radio transceiver operable in a UTRAN, a CDMA 2000, an EVDO, a WI-MAX system, etc. In Figure 1, the wireless device is positioned at a location within the coverage areas of a plurality of Wireless Local Area Networks (WLANs) 14. And, more specifically, the wireless device is shown to be positioned within the coverage areas of WLAN-1 14-1, WLAN-2 14-2, WLAN-3 14-3, and WLAN-N 14-N.

Each of the WLANs forms an interworking WLAN, an I-WLAN. Each of the I-WLANs has interworking functionality that provides for communication connections with Public Land Mobile Networks (PLMNs) 16. Again, the number, connection, and configuration of the I-WLANs and PLMNs is merely exemplary. The Public Land Mobile Networks are identified here variously as a Home Public Land Mobile Network (HPLMN), an Equivalent Home Public Land Mobile Network (EHPLMN), or a Visited Public Land Mobile Network (VPLMN). Such designations as home, equivalent home, and visited PLMNs are defined in terms of the wireless device 12. Other designations of the PLMNs would be provided with respect to other wireless devices.

In the exemplary configuration, the WLAN 14-1 is connected to the HPLMN 16-1, to the EHPLMN-1 16-2, and to the EHPLMN-2 16-3. The WLAN-2 14-2 is here connected to the EHPLMN-1 16-2, to the EHPLMN-2 16-3, and to the EPHLMN-3 16-4. The WLAN-3 14-3 is here connected to the EHPLMN-3 16-4, and to the EHPLMN-4 16-6. And, the WLAN 14-n is here connected to the EHPLMN-4 16-6, to the VPLMN-1 16-5, and to a VPLMN-2 16-7.

Through appropriate selection of the I-WLAN with which the wireless device communicates, the wireless device is further capable of communicating by way of an associated PLMN. That is to say, appropriate selection of an available WLAN is determinative of communication connectivity with a PLMN.

The wireless device includes radio transceiver circuitry, here represented by a transmit part 28 and a receive part 32. The wireless device further includes apparatus 34 of an embodiment of the present invention. The apparatus facilitates network selection by the wireless device and, more particularly, facilitates reconnection of the wireless device in communication connectivity in the event of loss of connectivity with either the WLAN or the associated PLMN. The apparatus 34 here represented to be formed of functional entities, implementable in any desired manner, including algorithms executable by processing circuitry, hardware elements, or combinations thereof. The entities forming the apparatus are, in various implementations, physically embodied as portions of the receiver transmit parts of the wireless device, control elements thereof, or elsewhere housed at, or connectable to, the wireless device.

The apparatus includes a listing creator 38 that operates to cause operation of the receive part of the wireless device to monitor for broadcasts made by different ones of the WLANs. The broadcasts include identifiers of the WLANs, such as their SSID values. The WLANs shall hereafter also be referred to as being SSIDs. Monitoring is performed to ascertain which, if any, SSID, i.e., WLAN, is available. The listing creator creates a listing 42 that identifies the available SSIDs. Indexed together with each of the SSIDs are PLMNs that are associated with the individual ones of the SSIDs. The associated PLMN information is obtained from broadcasts of the respective SSIDs or from information previously stored at the wireless device.

The listing is accessed pursuant to selection procedures selected by a selector 46 to select which of the available SSIDs with which to commence communications. Selection is made, for instance, responsive to which of the available SSIDs is associated with a particular PLMN. Once selection is made, the wireless device is caused to attempt to make a form a communication connection with the selected SSID and, in turn, with the associated PLMN. If the connection attempt is successful, communications commence. If not, further selection is attempted or made. The selector here further includes the functionality of a connection success and loss detector 47 that determines whether the connection attempt has been successful and to cause further operation of the selector in the event that the connection attempt is unsuccessful.

An embodiment of the present invention further includes a buffer 48 that buffers information associated with the SSID and associated PLMN selected by the selector 46 or otherwise with which the wireless device communicates. The buffer forms a data store that identifies thereby the SSID/PLMN with which the wireless device is, or most-recently has, communicated. If communications of the wireless device are handed off, or otherwise change, the buffered information is correspondingly updated.

The connection success and loss detector 47 further detects loss of the communication connection of the wireless device, either between the wireless device and the SSID, or with the associated PLMN, or other entity. Upon detection by the detector 52 of the communication connection loss, an accessor 54 is caused to access the buffer 48 to access the contents thereof. The contents that are accessed are retrieved and are used in a reconnection attempt by the wireless device. Because the buffered values are used, a time-consuming and power-consumptive search procedure of available SSIDs and their associated PLMNs is avoided. Instead, a nearly-immediate reconnection attempt can be carried out.

In various implementations, the buffer is embodied at permanent memory of the wireless device or a memory device that is removably engageable with the wireless device. Removable memory modules engageable with the wireless device include, for instance, an SIM, a USIM, an ISIM, an R-UIM, a compact flash memory, a micro-SD memory, a memory stick, or any of various other portable memory elements. In one implementation, the information stored at the buffer that forms the data store, is read directly thereto and accessed and retrieved directly therefrom. In another implementation, the information is imaged in the wireless device.

In exemplary operation pursuant to an embodiment of the present invention, the information buffered at the buffer is stored thereat upon selection made by the selector. In the event that communication connection with the selected SSID/PLMN is not successful, then the buffered information is replaced with substitute information.
In another implementation, information stored at the buffer is stored upon determination that the connection attempt is successful.

In one implementation, the connection attempt using the local radio access network, i.e., the SSID, authentication is carried out by way of which to authenticate the wireless device. Authentication takes the form, for instance, of EAP, web splash page, HTTP Digest, IPSec tunnel, or any of various other authentication and security schemes and mechanisms. In the exemplary implementation, information related to the way by which access was successfully obtained is also stored at the buffer. In the event of loss of communication connectivity, such information is also utilized in the reconnection attempt.

Upon determination by the communication loss detector of the loss of communication connectivity, the last-used SSID value and information is retrieved and used in the event that the connectivity with the SSID has been lost. In the event that the SSID connectivity has been maintained but the PLMN connectivity is lost, then the buffered PLMN information is used to attempt to make reconnection therewith. That is to say, the wireless device registers on the same PLMN earlier-utilized, as indicated by the buffered information stored at the buffer.

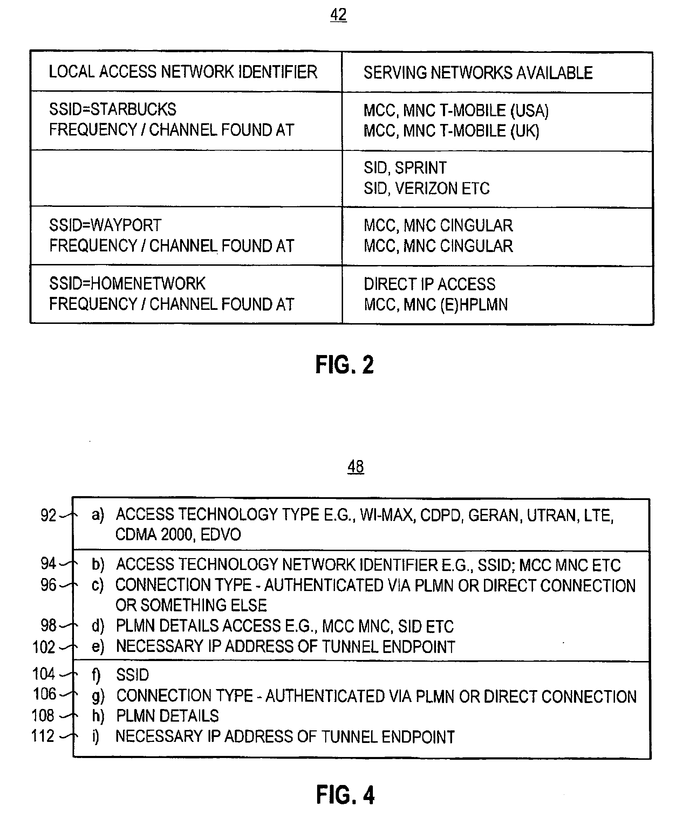

Figure 2 illustrates exemplary information stored at the listing 42 in which SSID information is stored together with PLMN information, identified in terms of MCC and MNC values. In the exemplary listing, identifications of the SSIDs also include the frequency/channel of the SSID. The final, i.e., bottom-most (as shown) entry has a direct IP access indicia associated with the SSID. The direct IP access provides, e.g., direct access to the HPLM using an ITSec tunnel. The direct IP access also, e.g., provides direct access to a VPLMN without performance of 802.1x authentication.

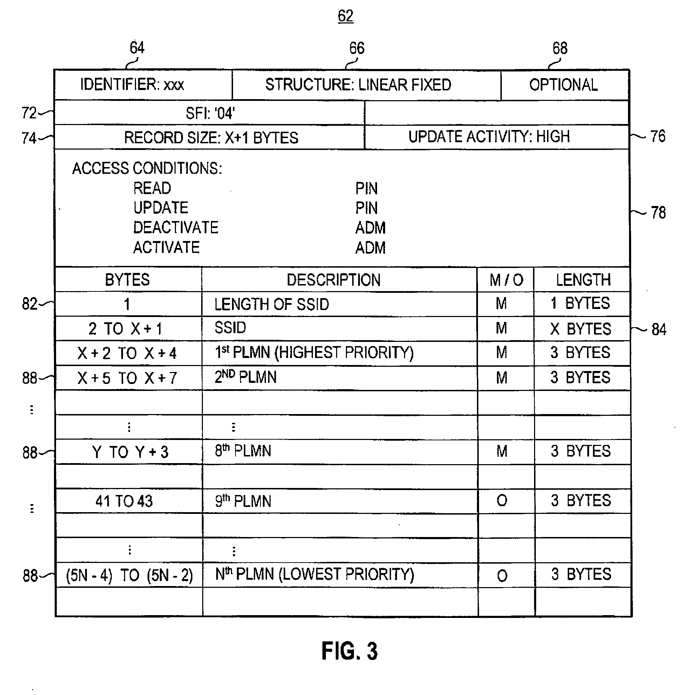

Figure 3 illustrates in greater detail an exemplary entry 62 of the listing 42. Here, the network identifier comprises a value of an SSID. The listing includes an identifier field 64, a structure field 66, an optional field 68, an SFI field indicator 72, a record size field 74, an update activity field 76, an access conditions field 78, an SSID-length identifier 82, an SSID value 84, and a series of associated PLMN indications 88.

Figure 4 illustrates exemplary buffer 48 contents stored during operation of an embodiment of the present invention, available to be accessed and retrieved in the event of loss of communication connectivity with the SSID or associated PLMN.

The buffer 48 includes an indication 92 of the access technology type, such as a WI-MAX, CDPD, GERAN, UTRAN, LTE, CDMA 2000, EDVO, etc. The buffer further includes an access technology network identifier 94, such as SSID value, MCC and MNC values, etc. And, the buffer also includes a connection type indication 96 such as an indication of authentication by way of a PLMN or direct connection, etc. The buffer further includes PLMN details 98 related to access, e.g., the MCC, MNC, SID, etc. values of the PLMN. And, the buffer further includes additional information, here, e.g., necessary IP address information 102 of a tunnel endpoint.

In the illustration of Figure 4, a specific example of an I-WLAN is utilized. In this example, the wireless device performs authentication with the PLMN pursuant to standard procedures, such as those set forth in technical specification document TS.24.234 using EAP authentication. In the event that no PLMNs are discovered, the wireless device attempts to set-up a direct IPSec tunnel to the HPLMN of the wireless device using standard procedures, such as those set forth in technical specification document TS33.234. Upon successful establishment to the PLMN, the wireless device further stores at the buffer details associated with that successful connection. And, Figure 4 further includes SSID information 104, connection-type information relating to authentication 106, such as that identifying whether identification is made by way of PLMN connection or direct connection. Additional PLMN details 108 and a necessary IP address of the tunnel endpoint 112 are further buffered.

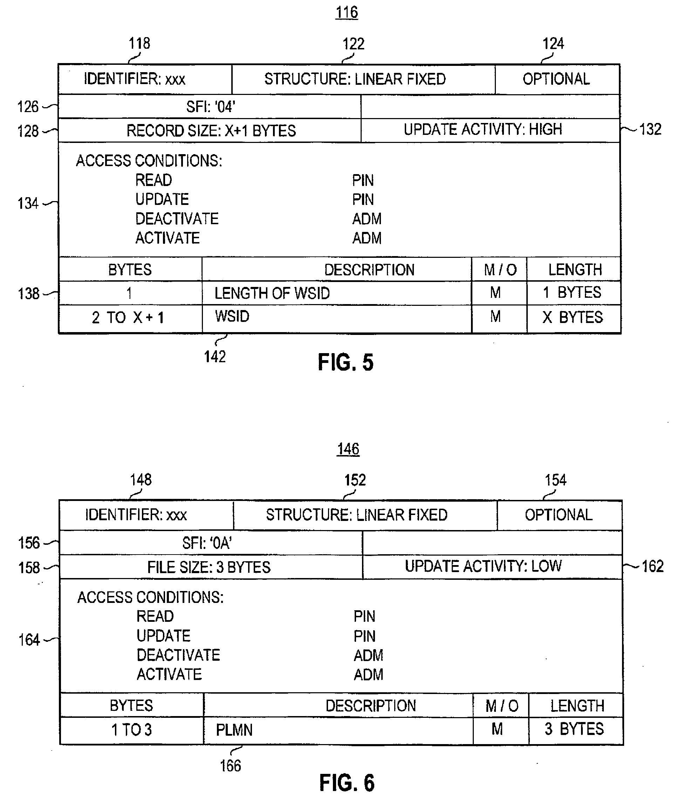

Figure 5 illustrates a table 116 representative of an exemplary storage format used pursuant to an embodiment of the present invention. An identifier field 118, a structure field 122, an optional field 124, an SFI identification field 126, a record size field 128, an update activity field 132, and an access condition field 134 all form part of the table. A single-byte WSDI length field 138 and a WSID indication 144 all form part of the table. The contents of the field 138 gives the number of bytes of the following data item, i.e., the field 142 that contains the WSID value. Coding of the contents of the field, in the exemplary implementation, is unsigned length coded on one byte. The field 142 contains a WLAN specific identifier (WSID) value, such as that defined in technical specification document TS 24.234 [40]. In the exemplary implementation, the coding is binary. Unused bytes are set to "FF" and not used either as a part of the value or for a length calculation.

The Table 146, shown in Figure 6, also represents an exemplary format used pursuant to operation of an embodiment of the present invention. The table includes an identifier field 148, a structure field 152, an optional field 154, an SFI field 156, a file size field 158, an update activity field 162, and an access condition field 164. And a PLMN indication 166 of between one and three bytes. The contents of the PLMN identifier include, e.g., the mobile country code followed by the mobile network code. Coding is provided in conformity, e.g., with technical specification document TS 24.008 [9].

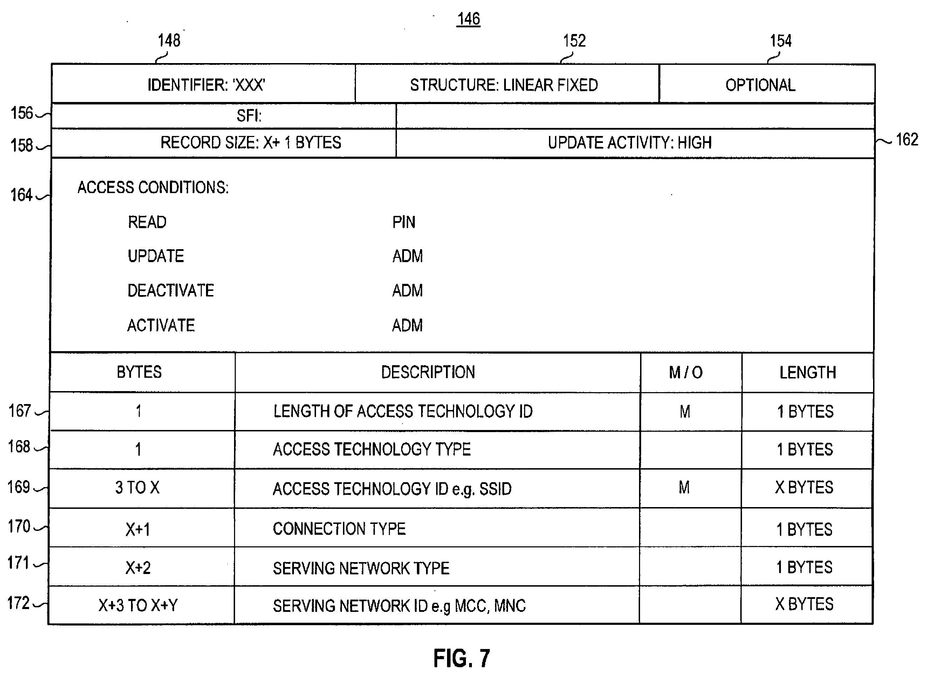

Figure 7 illustrates a Table 146, analogous to the Table 146 shown in Figure 6, but of another exemplary format used pursuant to operation of an embodiment of the present invention. The table again includes an identifier field 148, a structure field 152 and an optional field 154. A field 158, here representative of a record size field is here provided as well as, again also, an update activity field 162 and an access condition field 164. The Table 146 here includes a single-byte field 167 identifying a length of access technology identifier followed by a field 168 that identifies the access technology type. A field 169 of the designated length, identifies the access technology ID. A field 170 identifies a connection type, a field 171 identifies a serving network type, and a field 172 identifies a serving network identification.

In the event of loss of connectivity while the SSID remains available, the wireless device retrieves stored information against the SSID. If the HPLM associated with the wireless device is available or the equivalent HPLMN is available, the wireless device attempts to obtain access using the procedure set forth in the table. Or, the last registered PLMN identified in the Table 146 is attempted to be used.

If the access network is lost, the wireless device attempts to discover the access network. If the frequency/channel upon which it was previously located is stored, the wireless device first attempts to find the network on the frequency/channel that is retrieved. Otherwise, the wireless device starts a scan. The scan, in one implementation stops when it locates the last known access network, or, alternately, when the available frequency bands have been exhausted. If the latter, and the last-stored access network has been located, then the wireless device selects that network and the corresponding cellular network as per the above procedures. In the course of the search, if the wireless device discovers an access network that is known to support HPLMN connectivity, then, in one implementation, the device selects that access network.

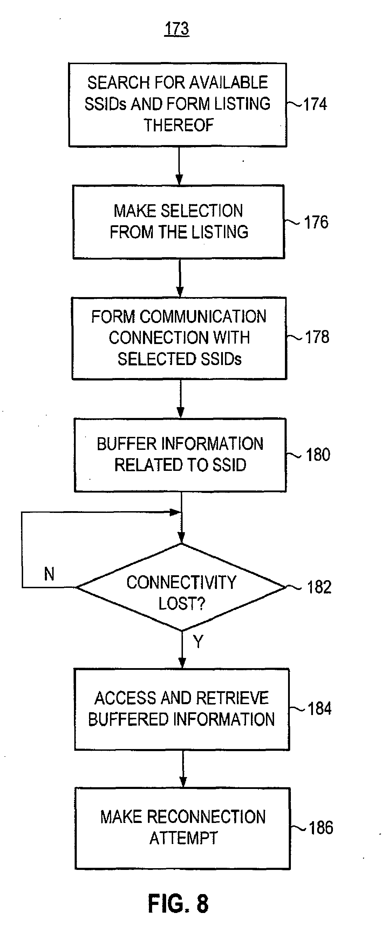

Figure 8 illustrates a process, shown generally at 173, representative of the process of operation of an embodiment of the present invention. First, and as indicated by the block 174, the wireless device searches for available SSIDs and forms a listing of available SSIDs together with their associated PLMNs for other information. Then, and as indicated by the block 176, the wireless device selects with which of the SSIDs to form communication connection. And, as indicated by the block 178, once selection is made, a communication connection is formed. Then, and as indicated by the block 180, information related to the selected SSID and associated PLMN is buffered.

Thereafter, a determination is made, indicated at the decision block 182, as to whether communication connectivity has been lost. If not, that is, communication connectivity continues, the no branch is taken back to the decision block. Otherwise, if communication connectivity is lost, the yes branch is taken to the block 184. At the block 184, the buffered information is accessed and retrieved. And, as indicated by the block 186, the retrieved information is used in a reconnection attempt to reconnect the wireless device back into communication connectivity.

Power consumption and time delays associated with requiring the wireless device to recreate an entire listing is obviated. Instead, buffered information is retrieved from the buffer and used in a reconnection attempt.

## Claims

1. Apparatus (34) for a wireless device (12) to facilitate reconnection thereof subsequent to loss of either public land mobile network (PLMN) (16) or WLAN (14) wireless communication connectivity said apparatus (34) comprising:
a buffer (42) configured to store an indication (84, 88) of an identity of a most-recent PLMN (16) and WLAN (14) connection of the wireless device (12); and
an accessor (54) configured to access said buffer (42) responsive to the loss of either the PLMN (16) or WLAN (14) wireless communication connectivity to retrieve a value of the indication (84, 88) stored thereat; the value used to attempt the reconnection of the wireless device (12) into the PLMN (16) and WLAN (14) communication connectivity.

2. The apparatus (34) of claim 1 wherein the wireless device (12) comprises an I-WLAN, Interworking Wireless Local Area Network, device (12) and wherein the identity of the most-recent PLMN (16) and WLAN (14) connection stored at said buffer (42) comprises an SSID, Service Set Identifier, value (84).

3. The apparatus (34) of claim 2 wherein said accessor (54) is configured to access the SSID value (84), the SSID value (84) used to attempt reconnection of the wireless device (12) into the PLMN (16) and WLAN (14) communication connectivity.

4. The apparatus (34) of claim 2 wherein the identity of the most-recent PLMN (16) and WLAN (14) connection stored at said buffer (42) further comprises a PLMN, Public Land Mobile Network, value (88) associated with the SSID value (84).

5. The apparatus (34) of claim 4 wherein said accessor (54) is configured to access the PLMN value (88), the PLMN value (88) used to attempt the reconnection of the wireless device (12) into the PLMN (16) and WLAN (14) communication connectivity.

6. The apparatus (34) of claim 1 wherein said buffer (42) is further configured to store an identity of an access connectivity mechanism (98).

7. The apparatus (34) of claim 6 wherein the access connectivity mechanism whose identity is stored at said buffer (42) comprises the identity of a direct IP, Internet Protocol, address.

8. The apparatus (34) of claim 1 further comprising a connection loss determiner (47) configured to determine occurrence of the loss of connection of the wireless device (12) of the PLMN (16) and WLAN (14) communication connectivity, said accessor (54) being configured to access said buffer (42) responsive to determination made by said connection loss determiner (47).

9. The apparatus (34) of claim 8 wherein the PLMN (16) and WLAN (14) communication connectivity comprises at least one of SSID connectivity and PLMN connectivity and wherein said connection loss determiner (47) is further configured to determine loss of any of the SSID connectivity and the PLMN connectivity.

10. The apparatus (34) of claim 1 further comprising a communication connectivity determiner (47) configured to determine existence of the PLMN (16) and WLAN (14) communication connectivity of the wireless device (12); the indication stored at said buffer (42) stored responsive to determination made by said communication connectivity determiner (47).

11. The apparatus (34) of claim 10 wherein the PLMN (16) and WLAN (14) communication connectivity comprises at least one of SSID connectivity and PLMN connectivity and wherein said communication connectivity determiner (47) is further configured to determine the at least one of the SSID connectivity and the PLMN connectivity.

12. The apparatus (34) of claim 1 wherein said buffer (42) comprises a removable memory element removably connectable to the wireless device (12).

13. The apparatus (34) of claim 1 wherein said buffer (42) comprises a permanent memory element of the wireless device (12).

14. A method (173) for facilitating reconnection of PLMN (16) and WLAN (14) communication connectivity of a wireless device (12) subsequent to loss of either the PLMN (16) or WLAN (14) communication connectivity said method comprising the steps of:
storing (180) an indication (84, 88) of an identity of a most-recent PLMN (16) and WLAN (14) connection of the wireless device (12);
accessing (184) the indication (84, 88) stored during said operation of storing (180) responsive to the loss of the PLMN (16) and WLAN (14) connection to retrieve a value of the indication (84, 88); and
attempting (186) to reconnect the wireless device (12) into the PLMN (16) and WLAN (14) communication connectivity using the value of the indication (84, 88) accessed during said operation of accessing (184).

15. The method of claim 14 wherein said operation of storing (180) comprises storing the indication (84, 88) at a removable memory element, removably connectable to the wireless device (12).

16. The method of claim 14 wherein said operation of storing (180) comprises storing the indication (84, 88) at a permanent memory element of the wireless device (12).

17. The method of claim 14 wherein said operation of attempting to reconnect (186) comprises attempting to reconnect into the communication connectivity with an SSID, Service Set Identifier, entity (84).

18. The method of claim 14 wherein said operation of attempting to reconnect (186) comprises attempting to reconnect into the communication connectivity with a PLMN, Public Land Mobile Network (16).

19. The method of claim 14 wherein said operation of attempting to reconnect comprises attempting to form a direct IP, Internet Protocol, connection.

## Patentansprüche

1. Vorrichtung (34) für eine drahtlose Vorrichtung (12) zur Erleichterung deren Wiederverbindung nachfolgend auf einen Verlust entweder einer drahtlosen PLMN(Public Land Mobile Network)- (16) oder einer WLAN- (14) Kommunikationskonnektivität, wobei die Vorrichtung (34) aufweist:
eine Puffervorrichtung (42), die konfiguriert ist, eine Anzeige (84, 88) einer Identität einer letzten PLMN- (16) und WLAN- (14) Verbindung der drahtlosen Vorrichtung (12) zu speichern; und
eine Zugriffsvorrichtung (54), die konfiguriert ist, auf die Puffervorrichtung (42) zuzugreifen in Reaktion auf den Verlust entweder der drahtlosen PLMN- (16) oder der WLAN- (14) Kommunikationskonnektivität, um einen Wert der Anzeige (84, 88) abzurufen, der dort gespeichert ist; wobei der Wert verwendet wird, um die Wiederverbindung der drahtlosen Vorrichtung (12) in die PLMN- (16) und WLAN- (14) Kommunikationskonnektivität zu versuchen.

2. Vorrichtung (34) gemäß Anspruch 1, wobei die drahtlose Vorrichtung (12) eine 1-WLAN(Interworking Wireless Local Area Network)-Vorrichtung (12) aufweist und wobei die Identität der letzten PLMN- (16) und WLAN- (14) Verbindung, die in der Puffervorrichtung (42) gespeichert ist, einen SSID(Service Set Identifier)-Wert (84) aufweist.

3. Vorrichtung (34) gemäß Anspruch 2, wobei die Zugriffsvorrichtung (54) konfiguriert ist, auf den SSID-Wert (84) zuzugreifen, wobei der SSID-Wert (84) verwendet wird, um eine Wiederverbindung der drahtlosen Vorrichtung (12) in die PLMN- (16) und WLAN- (14) Kommunikationskonnektivität zu versuchen.

4. Vorrichtung (34) gemäß Anspruch 2, wobei die Identität der letzten PLMN- (16) und WLAN- (14) Verbindung, die in der Puffervorrichtung (42) gespeichert ist, weiter einen PLMN(Public Land Mobile Network)-Wert (88) aufweist, der zu dem SSID-Wert (84) gehört.

5. Vorrichtung (34) gemäß Anspruch 4, wobei die Zugriffsvorrichtung (54) konfiguriert ist, auf den PLMN-Wert (88) zuzugreifen, wobei der PLMN-Wert (88) verwendet wird, um die Wiederverbindung der drahtlosen Vorrichtung (12) in die PLMN- (16) und WLAN- (14) Kommunikationskonnektivität zu versuchen.

6. Vorrichtung (34) gemäß Anspruch 1, wobei die Puffervorrichtung (42) weiter konfiguriert ist, eine Identität eines Zugriffskonnektivitätsmechanismus (98) zu speichern.

7. Vorrichtung (34) gemäß Anspruch 6, wobei der Zugriffskonnektivitätsmechanismus, dessen Identität in der Puffervorrichtung (42) gespeichert ist, die Identität einer direkten IP(Internet Protocol)-Adresse aufweist.

8. Vorrichtung (34) gemäß Anspruch 1, die weiter einen Verbindungsverlustbestimmer (47) aufweist, der konfiguriert ist, ein Auftreten des Verlustes einer Verbindung der drahtlosen Vorrichtung (12) der PLMN- (16) und WLAN- (14) Kommunikationskonnektivität zu bestimmen, wobei die Zugriffsvorrichtung (54) konfiguriert ist, auf die Puffervorrichtung (42) zuzugreifen in Reaktion auf die Bestimmung, die von dem Verbindungsverlustbestimmer (47) gemacht wird.

9. Vorrichtung (34) gemäß Anspruch 8, wobei die PLMN- (16) und WLAN- (14) Kommunikationskonnektivität zumindest eine aus einer SSID-Konnektivität und einer PLMN-Konnektivität aufweist und wobei der Verbindungsverlustbestimmer (47) weiter konfiguriert ist, einen Verlust einer aus der SSID-Konnektivität und der PLMN-Konnektivität zu bestimmen.

10. Vorrichtung (34) gemäß Anspruch 1, die weiter einen Kommunikationskonnektivitätsbestimmer (47) aufweist, der konfiguriert ist, ein Vorhandensein der PLMN- (16) und WLAN- (14) Kommunikationskonnektivität der drahtlosen Vorrichtung (12) zu bestimmen; wobei die Anzeige, die in der Puffervorrichtung (42) gespeichert ist, in Reaktion auf die Bestimmung gespeichert wird, die durch den Kommunikationskonnektivitätsbestimmer (47) gemacht wird.

11. Vorrichtung (34) gemäß Anspruch 10, wobei die PLMN- (16) und WLAN- (14) Kommunikationskonnektivität zumindest eine aufweist aus: SSID-Konnektivität und PLMN-Konnektivität und wobei der Kommunikationskonnektivitätsbestimmer (47) weiter konfiguriert ist, die zumindest eine der SSID-Konnektivität und der PLMN-Konnektivität zu bestimmen.

12. Vorrichtung (34) gemäß Anspruch 1, wobei die Puffervorrichtung (42) ein entfernbares Speicherelement aufweist, das entfernbar mit der drahtlosen Vorrichtung (12) verbindbar ist.

13. Vorrichtung (34) gemäß Anspruch 1, wobei die Puffervorrichtung (42) ein permanentes Speicherelement der drahtlosen Vorrichtung (12) aufweist.

14. Verfahren (173) zur Erleichterung einer Wiederverbindung einer PLMN- (16) und WLAN- (14) Kommunikationskonnektivität einer drahtlosen Vorrichtung (12) nachfolgend auf einen Verlust entweder der PLMN- (16) oder der WLAN-(14) Kommunikationskonnektivität, wobei das Verfahren die Schritte aufweist:
Speichern (180) einer Anzeige (84, 88) einer Identität einer letzten PLMN- (16) und WLAN- (14) Verbindung der drahtlosen Vorrichtung (12);
Zugreifen (184) auf die Anzeige (84, 88), die während der Operation des Speicherns (180) gespeichert wird, in Reaktion auf den Verlust der PLMN- (16) oder der WLAN- (14) Verbindung, um einen Wert der Anzeige (84, 88) abzurufen; und
Versuchen (186), die drahtlose Vorrichtung (12) in die PLMN- (16) und WLAN-(14) Kommunikationskonnektivität wiederzuverbinden unter Verwendung des Werts der Anzeige (84, 88), auf die während der Operation des Zugreifens (184) zugegegriffen wird.

15. Verfahren gemäß Anspruch 14, wobei die Operation des Speicherns (180) ein Speichern der Anzeige (84, 88) an einem entfernbaren Speicherelement aufweist, das entfernbar mit der drahtlosen Vorrichtung (12) verbindbar ist.

16. Verfahren gemäß Anspruch 14, wobei die Operation des Speicherns (180) ein Speichern der Anzeige (84, 88) an einem permanenten Speicherelement der drahtlosen Vorrichtung (12) aufweist.

17. Verfahren gemäß Anspruch 14, wobei die Operation des Versuchens einer Wiederverbindung (186) aufweist ein Versuchen, in die Kommunikationskonnektivität mit einer SSID(Service Set Identifier)-Entität (84) wiederzuverbinden.

18. Verfahren gemäß Anspruch 14, wobei die Operation des Versuchens einer Wiederverbindung (186) aufweist ein Versuchen, in die Kommunikationskonnektivität mit einem PLMN (Public Land Mobile Network) (16) wiederzuverbinden.

19. Verfahren gemäß Anspruch 14, wobei die Operation des Versuchens einer Wiederverbindung aufweist ein Versuchen, eine direkte IP(Internet Protocol)-Verbindung herzustellen.

## Revendications

1. Appareil (34) destiné à un dispositif sans fil (12) afin de faciliter la reconnexion de celui-ci après la perte de la connectivité de communication sans fil avec soit un réseau mobile public terrestre (RMPT) (16), soit un réseau local sans fil (WLAN, pour « *Wireless Local Area Network* ») (14), ledit appareil (34) comprenant :
un tampon (42) configuré pour stocker une indication (84, 88) d'une identité d'une connexion la plus récente du dispositif sans fil (12) avec un réseau RMPT (16) ou WLAN (14) ; et
un moyen d'accès (54) configuré pour accéder audit tampon (42) à la suite de la perte de connectivité de communication sans fil avec le réseau RMPT (16) ou WLAN (14), afin d'obtenir une valeur de l'indication (84, 88) qui y est stockée, la valeur étant utilisée pour tenter de reconnecter le dispositif sans fil (12) afin de rétablir la connectivité de communication avec le réseau RMPT (16) ou WLAN (14).

2. Appareil (34) selon la revendication 1, dans lequel le dispositif sans fil (12) est constitué d'un dispositif I-WLAN, pour « *Interworking Wireless Local Area Network* » *-* Réseau local sans fil d'interconnexion et dans lequel l'identité de la connexion la plus récente avec un réseau RMPT (16) ou WLAN (14) stockée dans ledit tampon (42) comprend une valeur de SSID (84), pour « *Service Set Identifier* » - Identificateur d'ensemble de services.

3. Appareil (34) selon la revendication 2, dans lequel ledit moyen d'accès (54) est configuré pour accéder à la valeur SSID (84), la valeur SSID (84) étant utilisée pour tenter de reconnecter le dispositif sans fil (12) afin de rétablir la connectivité de communication avec les réseaux RMPT (16) et WLAN (14).

4. Appareil (34) selon la revendication 2, dans lequel l'identité de la connexion la plus récente avec un réseau RMPT (16) ou WLAN (14), stockée dans ledit tampon (42), comprend en outre une valeur de réseau RMPT (88) associée à la valeur SSID (84).

5. Appareil (34) selon la revendication 4, dans lequel ledit moyen d'accès (54) est configuré pour accéder à la valeur de réseau RMPT (88), la valeur de réseau RMPT (88) étant utilisée pour tenter de reconnecter le dispositif sans fil (12) afin de rétablir la connectivité de communication avec les réseaux RMPT (16) et WLAN (14).

6. Appareil (34) selon la revendication 1, dans lequel ledit tampon (42) est en outre configuré pour stocker une identité d'un mécanisme de connectivité d'accès (98).

7. Appareil (34) selon la revendication 6, dans lequel le mécanisme de connectivité d'accès dont l'identité est stockée dans ledit tampon (42) comprend l'identité d'une adresse IP directe.

8. Appareil (34) selon la revendication 1, comprenant en outre un moyen de détermination de la perte de connexion (47) qui est configuré pour déterminer l'occurrence de la perte de connexion du dispositif sans fil (12) dans sa connectivité de communication avec le réseau RMPT (16) ou WLAN (14), ledit moyen d'accès (54) étant configuré pour accéder audit tampon (42) en réponse à la détermination faite par ledit moyen de détermination de la perte de connexion (47).

9. Appareil (34) selon la revendication 8, dans lequel la connectivité de communication avec le réseau RMPT (16) ou WLAN (14) comprend au moins soit la connectivité SSID, soit la connectivité RMPT, et dans lequel ledit moyen de détermination de la perte de connexion (47) est en outre configuré pour déterminer la perte de l'une quelconque parmi la connectivité SSID et la connectivité RMPT.

10. Appareil (34) selon la revendication 1, comprenant en outre un moyen de détermination de la connectivité de communication (47) configuré pour déterminer l'existence de la connectivité de communication du dispositif sans fil (12) avec le réseau RMPT (16) ou WLAN (14), l'indication stockée dans ledit tampon (42) étant stockée en réponse à la détermination faite par ledit moyen de détermination de la connectivité de communication (47).

11. Appareil (34) selon la revendication 10, dans lequel la connectivité de communication avec le réseau RMPT (16) ou WLAN (14) comprend au moins l'une parmi la connectivité SSID et la connectivité RMPT et dans lequel ledit moyen de détermination de la connectivité de communication (47) est en outre configuré pour déterminer au moins l'une parmi la connectivité SSID et la connectivité RMPT.

12. Appareil (34) selon la revendication 1, dans lequel ledit tampon (42) comprend un élément de mémoire amovible qui peut être connecté de manière amovible au dispositif sans fil (12).

13. Appareil (34) selon la revendication 1, dans lequel ledit tampon (42) comprend un élément de mémoire permanent du dispositif sans fil (12).

14. Procédé (173) destiné à faciliter le rétablissement de la connectivité de communication d'un dispositif sans fil (12) avec le réseau RMPT (16) ou WLAN (14) après la perte de la connectivité de communication avec soit le réseau RMPT (16), soit le réseau WLAN (14), ledit procédé comprenant les étapes consistant à :
stocker (180) une indication (84, 88) d'une identité d'une connexion la plus récente du dispositif sans fil (12) avec le réseau RMPT (16) ou WLAN (14) ;
accéder (184) à ladite indication (84, 88) stockée au cours de ladite opération de stockage (180) à la suite de la connexion avec le réseau RMPT (16) ou WLAN (14), afin d'obtenir une valeur de l'indication (84, 88) ; et
tenter (186) de reconnecter le dispositif sans fil (12) afin de rétablir la connectivité de communication avec le réseau RMPT (16) ou WLAN (14), en utilisant la valeur de l'indication (84, 88) consultée dans ladite étape d'accès (184).

15. Procédé selon la revendication 14, dans lequel ladite opération de stockage (180) comprend le stockage de l'indication (84, 88) dans un élément de mémoire amovible, qui peut être connecté de manière amovible au dispositif sans fil (12).

16. Procédé selon la revendication 14, dans lequel ladite opération de stockage (180) comprend le stockage de l'indication (84, 88) dans un élément de mémoire permanent du dispositif sans fil (12).

17. Procédé selon la revendication 14, dans lequel ladite opération de tentative de reconnexion (186) comprend une tentative de reconnexion pour rétablir la connectivité de communication avec une entité SSID (84).

18. Procédé selon la revendication 14, dans lequel ladite opération de tentative de reconnexion (186) comprend une tentative de reconnexion pour rétablir la connectivité de communication avec un réseau RMPT (16).

19. Procédé selon la revendication 14, dans lequel ladite opération de tentative de reconnexion comprend une tentative d'établissement d'une connexion IP directe.
